# EUROPÄISCHE PATENTSCHRIFT

(11) **EP 3 312 084 B1**
(45) Veröffentlichungstag und Bekanntmachung des Hinweises auf die Patenterteilung: **26.06.2019**
(21) Anmeldenummer: 16194740.3
(22) Anmeldetag: 20.10.2016
(51) Int. Cl.: B64C 1/20, B64D 9/00, B60P 7/13, B65G 13/06

(54) **FRACHTANTRIEBSEINHEIT MIT ERFASSUNG EINER LASTBEWEGUNG**
CARGO POWER DRIVE UNIT WITH DETECTION OF A MOVEMENT OF CARGO
UNITE D'ENTRAINEMENT DE CARGAISON AVEC DETECTION DE MOUVEMENT

(43) Veröffentlichungstag der Anmeldung: 25.04.2018
(73) Patentinhaber: Airbus Operations GmbH, 21129 Hamburg (DE)
(72) Erfinder: Fischer, Dennis, 21129 Hamburg (DE); Nuessen, Oliver, 21129 Hamburg (DE)
(74) Vertreter: Schicker, Silvia

(56) Entgegenhaltungen:
- EP-A2- 0 937 643
- EP-A2- 1 695 908
- EP-A2- 2 444 320
- WO-A1-01/28894

## Beschreibung

Die Erfindung betrifft eine Frachtantriebseinheit für einen Frachtraum, insbesondere für den Frachtraum von einem Luftfahrzeug, sowie einen Frachtraum und ein Verfahren zum Betreiben eines Frachtraums.

In Frachträumen von Luftfahrzeugen ist es bekannt, dass Lasten, beispielsweise in Form standardisierter Paletten oder Container (sog. unit load devices ULD), über ein oder mehrere Frachttore ein- und ausladbar sind. Bei einem Beladen des Frachtraumes müssen die Lasten aber oftmals von dem Frachttor weg und in entfernte Bereiche des Frachtraums transportiert werden. Hingegen müssen die Lasten bei einem Entladen des Frachtraums wieder zu dem Frachttor zurücktransportiert werden. Dies kann durch Frachtantriebseinheiten unterstützt werden, welche in der Regel bodenmontiert und positionsfest sind sowie angetriebene Rollen umfassen (sog. Rollenantriebseinheiten oder power drive units PDU).

Herkömmliche Frachträume umfassen eine Vielzahl derartiger Frachtantriebseinheiten. Im Rahmen eines Ladevorganges kann eine Last dabei mit mehreren Frachtantriebseinheiten wechselwirken und zumindest abschnittsweise von einer Frachtantriebseinheit zur nächsten bewegt werden, um ein kontinuierliches Verschieben der Last innerhalb des Frachtraums zu erreichen. Beispielhaft wird hierzu auf die Dokumente EP 2 813 429 A1 sowie EP 0 881 144 B1 verwiesen. Dokument EP 0 937 643 A2 beschreibt ein Frachtladesystem umfassend eine Antriebsrolle mit fester Förderachse und eine in Förderrichtung aktiven Messrolle, die Bewegungsinformationen der Last erfasst und die Geschwindigkeit der Antriebsrolle daran anpassen kann, sowie eine zentrale Steuereinheit und Bedienungseinrichtung für mehrere solche Antriebs- und Messrollen. Dokument EP 2 444 320 A2 beschreibt ein Frachtdeck mit mehreren ausrichtbaren Frachtfördereinheiten, jeweils umfassend mehrere optische Sensoren über die auf die Bewegung einer Last geschlossen werden kann, zwecks Steuerung der Fördereinheiten über eine zentrale Steuereinheit. Dokument EP 1 695 908 beschreibt mehrere Fördereinheiten mit fester Förderachse, jeweils wenigstens ein Sensormittel umfassend zwecks Steuerung der Fördereinheiten über eine zentrale Steuereinheit. Dokument WO01/28894 beschreibt eine Fördereinheit mit eigenem Schlupfsensor zum gezielten Abschalten des Antriebsmotors zur Vermeidung von Überlastung.

Das koordinierte Ansteuern der Frachtantriebseinheiten, um eine gewünschte Lastbewegung zu erzielen, erfolgt derzeit mittels gesonderter Bedienelemente, wie beispielsweise Joysticks oder Schaltern, die manuell betätigt werden müssen. Das Bereitstellen derartiger Bedienelemente geht jedoch mit einem entsprechenden Einrichtungsaufwand einher und erhöht die Systemkomplexität.

Eine Aufgabe der Erfindung besteht somit darin, eine Lösung bereitzustellen, die ein zuverlässiges Bewegen von Lasten bei einer begrenzten Systemkomplexität ermöglicht.

Hierzu wird eine Frachtantriebseinheit für einen Frachtraum bereitgestellt, insbesondere für den Frachtraum von einem Luftfahrzeug (zum Beispiel von einem Flugzeug). Die Frachtantriebseinheit umfasst wenigstens ein angetriebenes Kraftübertragungselement, das dazu ausgebildet ist, Antriebskräfte auf eine in dem Frachtraum angeordnete Last zu übertragen, um die Last innerhalb des Frachtraums zu bewegen.

Die Frachtantriebseinheit kann allgemein als eine gesondert handhabbare Baugruppe bereitgestellt sein. Ferner kann sie an Verbindungsleitungen des Frachtraums anschließbar sein, beispielsweise an Stromleitungen sowie Kommunikations-, Signal- oder Datenleitungen. Die Frachtantriebseinheit ist weiterhin dazu ausgebildet, Lasten entlang wenigstens einer vorbestimmten Bewegungsachse zu bewegen, und zwar bevorzugt in beide Richtungen entlang dieser Achse. Dabei können die Frachtantriebseinheit und insbesondere deren Kraftübertragungselement auch zum Einnehmen vorbestimmter Bewegungsachsen variabel ansteuerbar sein, sodass beispielsweise eine Ausrichtung des Kraftübertragungselements je nach gewünschter Bewegungsachse variiert werden kann. Ebenso kann aber vorgesehen sein, dass sie Frachtantriebseinheit und insbesondere deren Kraftübertragungselement mit einer vorbestimmten und im Wesentlichen feststehenden Ausrichtung in dem Frachtraum angeordnet sind, um eine Lastbewegung lediglich entlang vorbestimmter und nichtvariabler Bewegungsachsen zu erzeugen und insbesondere entlang lediglich einer Bewegungsachse.

In bekannter Weise kann die Frachtantriebseinheit derart nahe einem Frachttor eines Luftfahrzeugs angeordnet sein, dass eine Lastbewegung quer zu einer Längsachse des Frachtraums beziehungsweise des Luftfahrzeugs ermöglicht wird. Mit anderen Worten kann sich die Bewegungsachse der Frachtantriebseinheit quer zu einer von dem Frachttor definierten Rumpföffnung erstrecken. Ebenso kann die Frachtantriebseinheit eine Lastbewegung entlang einer Längsachse des Frachtraums beziehungsweise des Luftfahrzeugs ermöglichen, also im Wesentlichen parallel zu einer von dem Frachttor definierten Rumpföffnung.

Zum Übertragen von Antriebskräften kann das Kraftübertragungselement dazu ausgebildet sein, sich zumindest mittelbar an der Last abstützen und insbesondere damit in Kontakt zu treten. Der Kontakt kann formschlüssig und/oder kraftschlüssig erfolgen. Ferner kann das Kraftübertragungselement allgemein beweglich, verschieblich, rotierbar oder dergleichen sein, um Antriebskräfte auf die Last zu übertragen. Das Erzeugen der Antriebskräfte kann mittels eines Elektromotors erfolgen.

Die Frachtantriebseinheit umfasst ferner eine Sensoreinheit, die dazu ausgebildet ist, omnidirektional von der Last überfahren zu werden und wenigstens einen Bewegungsparameter der Last bidirektional entlang der Bewegungsachse zu erfassen. Der Bewegungsparameter kann sich auf eine Bewegung der Last relativ zu der in der Regel ortsfesten Frachtantriebseinheit und insbesondere deren Kraftübertragungselement beziehen. Die Sensoreinheit kann allgemein für eine visuelle, taktile, kapazitive und/oder induktive Erfassung der Lastbewegung bzw. des Bewegungsparameters ausgebildet sein. Insbesondere kann die Sensoreinheit direkt in der durch die Frachtantriebseinheit gebildeten Baugruppe integriert sein. Übergeordnet kann die Sensoreinheit somit dazu ausgebildet sein, einen geeigneten Vorgang zu erfassen, der einen Rückschluss auf eine etwaige Lastbewegung und insbesondere auf den gewünschten Bewegungsparameter ermöglicht. Ferner kann die Sensoreinheit entsprechende Signale erzeugen, die einen Rückschluss auf den Bewegungsparameter ermöglichen, und diese an eine nachfolgend erläuterte Steuereinheit der Frachtantriebseinheit übermitteln.

Die Frachtantriebseinheit umfasst ferner eine Steuereinheit, die dazu ausgebildet ist, das Kraftübertragungselement nach Maßgabe des erfassten Bewegungsparameters zu steuern. Beispielsweise kann ein Betriebszustand des Kraftübertragungselements nach Maßgabe des erfassten Bewegungsparameters geändert werden. Dies kann ein Ein- und/oder Ausschalten des Kraftübertragungselements einschließen, insbesondere bezogen auf das Erzeugen von Antriebskräften. Ebenso kann dies ein Ändern der von dem Kraftübertragungselement erzeugten Antriebskräfte einschließen. Die Steuereinheit kann hierzu mit der Sensoreinheit verbunden sein und von dieser Signale bezüglich des erfassten Bewegungsparameters erhalten. Darauf basierend können dann Steuersignale für das Kraftübertragungselement erzeugt werden. Ferner versteht es sich, dass die Steuereinheit auch für eine Regelung des Kraftübertragungselements ausgebildet sein kann, also beispielsweise das Einhalten der Steuervorgaben durch das Kraftübertragungselement überwacht und basierend auf etwaigen Abweichungen die Steuervorgaben anpasst (feedback-control). Es ist darauf hinzuweisen, dass, sofern nicht anders angegeben, der Begriff "Steuern" im Rahmen der vorliegenden Offenbarung allgemein auch stets ein optionales Regeln umfassen kann.

Mit der vorstehenden Lösung kann ermöglicht werden, dass ein Bediener durch Verschieben einer Last in einen Arbeitsbereich der Frachtantriebseinheit eine sensorische Erfassung der entsprechenden Lastbewegung und somit auch automatisch eine Ansteuerung des Kraftübertragungselements auslöst. Im Gegensatz zu bekannten Lösungen können hierzu keine oder zumindest weniger weitere manuellen Eingaben erforderlich sein. Insbesondere können zusätzliche Bedienelemente weniger komplex gestaltet werden oder sogar gänzlich entfallen. Mit anderen Worten kann die erfindungsgemäße Lösung ermöglichen, dass in Abhängigkeit der erfassten Lastbewegung Antriebskräfte automatisch zugeschaltet, variiert und/oder abgeschaltet werden.

Bei dem Verschieben einer Last durch den Frachtraum können ferner lediglich lokal beziehungsweise abschnittsweise Antriebskräfte zugeschaltet werden, um das Verschieben elektromotorisch zu unterstützen. Dies kann durch lediglich diejenigen Frachtantriebseinheiten erfolgen, die in unmittelbarer Nähe zu der Last angeordnet sind und deren Bewegung entsprechend sensorisch erfassen. Weiter entfernt angeordnete Frachtantriebseinheit können hingegen in einen Ruhezustand versetzt werden, in dem sie keine Antriebskräfte erzeugen. Dies kann eine besonders bedarfsgerechte Erzeugung von Antriebskräften ermöglichen, wodurch auch der Energie- und insbesondere der Strombedarf während des Be- und Entladens eines Frachtraums reduziert werden kann.

Gemäß einer Weiterbildung ist die Frachtantriebseinheit in einem Bodenbereich des Frachtraums anordenbar. Bei einem Ausbilden als separat handhabbare Baugruppe kann die Frachtantriebseinheit somit in Ausnehmungen, Rahmen, Bodenplatten oder dergleichen in einem Frachtraumboden anordenbar sein. Zumindest das Kraftübertragungselement kann dabei dazu ausgebildet sein, wahlweise derart über den Bodenbereich hervorzustehen, dass es in Kontakt mit einer in dem Frachtraum angeordneten Last treten kann, um diese entlang des Bodenbereiches zu verschieben.

Alternativ oder zusätzlich kann das Kraftübertragungselement rollenförmig bzw. als Rolle ausgebildet sein. Die Rolle kann um eine feststehende oder variiebare Rotationsachse rotieren und Antriebskräfte auf eine Last übertragen, die sich quer und insbesondere orthogonal zu der Rotationsachse erstrecken können. Unter dem Begriffe Rolle können dabei allgemein um eine Rotationsachse rotierbare Räder, Scheiben, Zylinder oder dergleichen verstanden werden.

Der erfasste Bewegungsparameter kann eine Bewegungsgeschwindigkeit der Last umfassen, insbesondere relativ zu oder bezogen auf die in der Regel ortsfeste Frachtantriebseinheit und/oder deren Kraftübertragungselement. Zusätzlich oder alternativ kann der Bewegungsparameter eine Bewegungsrichtung der Last umfassen, insbesondere relativ zu dem und/oder bezogen auf das Kraftübertragungselement. Unter dem Begriff "bezogen auf" kann dabei verstanden werden, dass die relevante Komponente als ortsfester Bezugspunkt dient und die Bewegung in Relation zu diesem Bezugspunkt definiert wird.

Mit anderen Worten kann der Bewegungsparameter somit angeben oder Rückschlüsse darauf ermöglichen, ob die Last auf die Frachtantriebseinheit zu oder von dieser weg bewegt wird, beziehungsweise in welche Richtung entlang einer vorbestimmten Bewegungsachse eine Lastbewegung erfolgt.

Die Steuereinheit kann dazu ausgebildet sein, das Kraftübertragungselement zum Erzeugen vorbestimmter Antriebskräfte zu steuern, insbesondere derart, dass die Antriebskräfte zumindest teilweise im Wesentlichen proportional zu dem erfassten Bewegungsparameter erzeugt werden. Dies kann das Erzeugen von Antriebskräften mit einem vorbestimmten Betrag, Verlauf oder einer vorbestimmten Änderung betreffen (zum Beispiel einer vorbestimmten Zu- oder Abnahme). Beispielsweise kann vorgesehen sein, dass die Antriebskräfte bei einer erfassten zunehmenden Bewegungsgeschwindigkeit der Last erhöht und/oder bei einer abnehmenden Bewegungsgeschwindigkeit verringert werden, wobei die entsprechenden Änderungen proportional erfolgen können. Dies kann auch lediglich für einen vorgegebenen Bewegungsparameterbereich vorgesehen sein (also lediglich teil- oder bereichsweise), wohingegen bei einem Überschreiten vorbestimmter Schwellenwerte nichtproportionale Änderungen der Antriebskräfte erfolgen können, insbesondere deren vollständige Abschaltung.

Übergeordnet kann auch vorgesehen sein, dass die Steuereinheit die Antriebskräfte derart steuert, dass eine vorgegebene Sollgeschwindigkeit der Last erreicht oder zumindest nicht überschritten wird.

Gemäß einer Variante kann das Kraftübertragungselement dazu ausgebildet sein, zumindest derartige Antriebskräfte zu erzeugen, dass eine sensorisch erfasste Lastbewegungsgeschwindigkeit ohne weitere manuelle Unterstützung aufrecht erhalten werden kann oder, anders ausgedrückt, die Lastbewegung im Wesentlichen vollständig übernommen wird. In diesem Fall kann ein Bediener sich auf das Überwachen der Lastbewegung wie zum Beispiel das Einhalten einer vorgegebenen Ausrichtung konzentrieren, wohingegen die Lastbewegungs- bzw. Antriebskräfte im Wesentlichen vollständig von der Frachtantriebseinheit aufgebracht werden können. Allgemein versteht es sich, dass auch mehrere Frachtantriebseinheit gleichzeitig Antriebskräfte erzeugen und auf eine Last aufbringen können. Somit kann es prinzipiell auch ausreichen, wenn eine Frachtantriebseinheit lediglich derartige Antriebskräfte erzeugt, dass eine erfasste Lastbewegungsgeschwindigkeit zumindest zur Hälfte oder zu einem Viertel aufrechterhalten werden kann. Übergeordnet kann die Lastbewegungsgeschwindigkeit dabei zwischen 0 m/s und 1 m/s betragen, wobei die Lasten allgemein ein Gesamtgewicht von bis zu 2 t, bis zu 4 t, bis zu 6 t, bis zu 10 t, oder bis zu 15 t aufweisen können.

Die Steuereinheit kann ferner dazu ausgebildet sein, das Kraftübertragungselement zum Erzeugen von Antriebskräften in vorbestimmte Richtungen zu steuern, insbesondere derart, dass die Antriebskräfte im Wesentlichen in derjenigen Richtung erzeugt werden, in der eine Bewegung der Last relativ zu dem Kraftübertragungselement erfolgt. Wie vorstehend erläutert, kann der Bewegungsparameter beispielsweise angeben, ob eine Last auf die Frachtantriebseinheit zu oder von dieser weg bewegt wird, beziehungsweise in welche Richtung entlang einer vorgegebenen Bewegungsachse die Last bewegt wird. Entsprechend können auch die Antriebskräfte derart erzeugt werden, dass sie die Fortbewegung der Last unterstützen, also im Wesentlichen in dieselbe Richtung wirken.

Eine Weiterbildung sieht vor, dass die Steuereinheit dazu ausgebildet ist, Signale von wenigstens einer weiteren Frachtantriebseinheit zu empfangen und/oder an wenigstens eine weitere Frachtantriebseinheit zu senden. Die Frachtantriebseinheit kann somit für einen Daten- oder Signalaustausch mit weiteren Frachtantriebseinheiten vernetzbar sein, zum Beispiel durch Anschließen an einen gemeinsamen Kommunikationsbus. Die Signale können dabei Informationen bezüglich des erfassten Bewegungsparameters und/oder bezüglich der erzeugten Antriebskräfte enthalten. Zusätzlich oder alternativ können die Signale allgemein Rückschlüsse darauf ermöglichen, ob die Frachtantriebseinheit aktuell eine Last bewegt oder bewegen könnte, da eine Last in einem Arbeitsbereich der Frachtantriebseinheit angeordnet ist. Derartige Informationen werden im Folgenden auch als Lastbewegungszustand einer Frachtantriebseinheit bezeichnet.

Bei der weiteren Frachtantriebseinheit kann es sich insbesondere um eine Frachtantriebseinheit handeln, die entlang einer gemeinsamen Bewegungsachse angeordnet ist. Wie einleitend erwähnt, können eine Mehrzahl von Frachtantriebseinheiten derart angeordnet sein, dass sie eine Last entlang einer gemeinsamen Bewegungsachse bewegen können (z.B. entlang der Flugzeuglängsachse), wobei die Last sozusagen von einer Frachtantriebseinheit zu der nächsten übergeben wird. Die weitere Frachtantriebseinheit kann dabei entlang der Bewegungsachse betrachtet unmittelbar vor- und/oder nachgelagert sein. Somit kann eine Annäherung einer zu bewegenden Last vorab erkannt werden und die Steuereinheit kann die Frachtantriebseinheit auf das anstehende Bewegen dieser Last vorbereiten und zum Beispiel einen Ruhezustand unterbrechen.

Die Steuereinheit kann ferner dazu ausgebildet sein, das Kraftübertragungselement nach Maßgabe eines empfangenen Signals von wenigstens einer weiteren Frachtantriebseinheit zu steuern, insbesondere wobei das empfangene Signal Informationen bezüglich des von der weiteren Frachtantriebseinheit erfassten Bewegungsparameters umfassen kann. Wie vorstehend erläutert, kann das Kraftübertragungselement mittels der Steuereinheit also selektiv ein- oder ausgeschaltet werden und/oder die hiervon erzeugten Antriebskräfte können in gewünschter Weise variiert werden, und zwar in Abhängigkeit des Bewegungsparameters der weiteren Frachtantriebseinheit.

Allgemein kann ferner vorgesehen sein, dass die Steuereinheit dazu ausgebildet ist, einen Betriebszustand der Frachtantriebseinheit zu ändern, wenn das empfangene Signal darauf schließen lässt, dass die Last von der weiteren Frachtantriebseinheit in Richtung der Frachtantriebseinheit bewegt wird.

Die Frachtantriebseinheit kann weiterhin eine Aufstelleinheit umfassen, die dazu ausgebildet ist, das Kraftübertragungselement in Richtung der Last und/oder von dieser wegzubewegen, und insbesondere, wobei die Steuereinheit dazu ausgebildet ist, die Aufstelleinheit nach Maßgabe des erfassten Bewegungsparameters und/oder eines empfangenen Signals von einer weiteren Frachtantriebseinheit zu steuern. Die Aufstelleinheit kann in bekannter Weise ansteuerbar sein, um das Kraftübertragungselement für das Übertragen von Antriebskräften in Kontakt mit einer Last zu bringen und/oder, wenn keine derartige Übertragung gewünscht ist, von der Last zu lösen. In letzterem Fall kann ferner vorgesehen sein, dass das Kraftübertragungselement unterhalb eines Bodenbereiches anordenbar ist, also sozusagen innerhalb der Frachtantriebseinheit versenkt wird, sodass es nicht als Störkontur in den Frachtraum hineinragt. Die Aufstelleinheit kann einen motorischen Antrieb umfassen (zum Beispiel einen Elektromotor), der unabhängig von einer Antriebseinheit des Kraftübertragungselements zum Erzeugen von Antriebskräften bereitgestellt sein kann.

Die Aufstelleinheit kann das Kraftübertragungselement ferner selektiv gemäß zumindest einer der vorstehenden Bewegungsarten relativ zu der Last bewegen, also zum Beispiel selektiv anheben oder absenken. Dies kann nach Maßgabe des Bewegungsparameters erfolgen, beispielsweise wenn dieser angibt, dass eine Lastbewegung sensorisch erfasst wurde (Anheben) oder dass eine Lastbewegung nicht länger erfolgt (Absenken). Ebenso können derartige Bewegungen mittels der Aufstelleinheit dann erfolgen, wenn eine weitere Frachtantriebseinheit (und insbesondere eine entlang einer gemeinsam Bewegungsachse unmittelbar vor- oder nachgelagerte Frachtantriebseinheit) Signale bezüglich einer einsetzenden oder beendeten Lastbewegung übermittelt. In diesem Fall kann insbesondere ein Anheben des Kraftübertragungselementes in Vorbereitung auf eine anstehende Lastbewegung erfolgen.

Gemäß einem weiteren Aspekt kann die Steuereinheit dazu ausgebildet sein, eine Stromaufnahme der Frachtantriebseinheit zu ermitteln und, optional, das Kraftübertragungselement nach Maßgabe der ermittelten Stromaufnahme zu steuern. Die Steuereinheit kann hierfür einen entsprechenden Stromaufnahmesensor umfassen oder damit verbunden sein. Die Stromaufnahme kann in bekannter Weise auf eine Belastung der Frachtantriebseinheit hindeuten, also beispielsweise mit welcher Kraft eine Last relativ hierzu bewegt wird. Die Stromaufnahme kann dabei insbesondere das Kraftübertragungselement betreffen und genauer gesagt die im Zusammenhang mit dem Erzeugen von Antriebskräften erfolgende Stromaufnahme. Steigen diese unerwartet stark an, kann dies beispielsweise bedeuten, dass ein zulässiger Schwellenwert der Lastgeschwindigkeit überschritten wird, woraufhin die Steuereinheit die von dem Kraftübertragungselement erzeugten Antriebskräfte reduzieren kann. Ein unerwarteter Rückgang der Stromaufnahme kann hingegen bedeuten, dass eine Sollgeschwindigkeit der Last nicht erreicht wird, woraufhin die Antriebskräfte entsprechend erhöht werden können.

Die Frachtantriebseinheit kann ferner dazu ausgebildet sein, eine Last im Wesentlichen entlang wenigstens einer Bewegungsachse zu bewegen, wobei, optional, die Sensoreinheit und das Kraftübertragungselement ferner im Wesentlichen auf der Bewegungsachse angeordnet sein können oder auf einer hierzu parallelen gemeinsamen Achse. Bei der Bewegungsachse kann es sich um eine der vorstehend genannten Varianten handeln, also beispielsweise eine Bewegungsachse entlang der Flugzeuglängsachse oder quer hierzu. Die Sensoreinheit und das Kraftübertragungselement können somit im Wesentlichen hintereinander entlang der Bewegungsachse angeordnet sein (oder entlang einer gemeinsamen Achse, die hierzu parallel ist). Hierdruch kann die Sensoreinheit eine Lastbewegung relativ zu der Frachtantriebseinheit zuverlässig ermitteln.

Die Sensoreinheit kann in einem Abstand von weniger als 1 Meter und vorzugsweise weniger als 30 cm oder weniger als 10 cm von dem Kraftübertragungselement angeordnet sein. Dies kann zum einen zur Kompaktheit der Frachtantriebseinheit beitragen, ebenso aber die Zuverlässigkeit der Bewegungsermittlung verbessern.

Die Sensoreinheit kann ferner ein bewegbares Element umfassen, das nach Maßgabe der Bewegungen der Last bewegbar ist. Hierbei kann es sich um eine Rolle, eine Kugel oder dergleichen handeln. Ferner kann das bewegbare Element allgemein omnidirektional bewegbar sein, um sämtlichen Lastbewegungen nachgeben zu können. Das bewegbare Element kann ferner dazu ausgebildet sein, in Kontakt mit einer Last zu treten, also ein taktiles Erfassen der Lastbewegung zu ermöglichen. Hierzu kann das bewegbare Element dazu eingerichtet sein, dauerhaft oder zumindest selektiv über den Bodenbereich des Frachtraumes vorzustehen.

Die Sensoreinheit kann ferner dazu ausgebildet sein, basierend auf den Bewegungen des bewegbaren Elements den Bewegungsparameter der Last zu erfassen. Anders ausgedrückt kann die Sensoreinheit basierend auf den Bewegungen des bewegbaren Elements Signale erzeugen, die Rückschlüsse auf einen Bewegungsparameter der Last ermöglichen. Diese Signale können von der Sensoreinheit selbst oder von der Steuereinheit der Frachtantriebseinheit weiterverarbeitet werden. Erfindungsgemäß ist vorgesehen, dass die Sensoreinheit dazu ausgebildet ist, wenigstens eine Erfassung des Bewegungsparameters in beide Richtungen entlang einer vorbestimmten Bewegungsachse vorzunehmen. Dabei kann es sich um jegliche der vorstehend diskutierten Varianten der Bewegungsachse handeln, also eine Achse, entlang derer die Antriebskräfte erzeugt werden.

Die Erfindung betrifft ferner einen Frachtraum, insbesondere von einem Luftfahrzeug (zum Beispiel von einem Flugzeug), umfassend wenigstens eine Frachtantriebseinheit nach einem der vorangehenden Aspekte. Wie einleitend diskutiert, kann der Frachtraum auch eine Mehrzahl solcher Frachtantriebseinheiten umfassen, die ferner angeordnet sein können, um gemeinsam und/oder nacheinander eine Lastbewegung entlang einer vorbestimmten Bewegungsachse zu ermöglichen. Insbesondere kann eine erste Gruppe von Frachtantriebseinheiten eine Bewegung quer zu einer Frachtraumlängsachse ermöglichen (zum Beispiel im Bereich eines Frachttores) und eine zweite Gruppe von Frachtantriebseinheiten kann eine Bewegung entlang der Frachtraumlängsachse in von dem Frachttor entfernte Bereiche ermöglichen. Die jeweiligen Gruppen können also gemeinsame Bewegungsachsen definieren, entlang derer sie angeordnet und entlang derer Antriebskräfte erzeugbar sind. Zumindest innerhalb dieser jeweiligen Gruppen können die Frachtantriebseinheiten ferner in der vorstehend beschriebenen Weise Signale austauschen, um bedarfsgerecht lediglich diejenigen Frachtantriebseinheiten zu betreiben, die an einer Lastbewegung direkt oder unmittelbar bevorstehend beteiligt sind.

Die Erfindung betrifft ferner ein Verfahren zum Betreiben eines Frachtraums, wobei der Frachtraum wenigstens eine erste und zweite Frachtantriebseinheit umfasst, die jeweils wenigstens ein angetriebenes Kraftübertragungselement und eine Sensoreinheit umfassen, wobei das Kraftübertragungselement dazu ausgebildet ist, Antriebskräfte auf eine in dem Frachtraum angeordnete Last zu übertragen, um die Last innerhalb des Frachtraums entlang einer vorgegebenen Bewegungsachse zu bewegen, und wobei die Sensoreinheit dazu ausgebildet ist, omnidirektional von der Last überfahren zu werden und wenigstens einen Bewegungsparameter der Last bidirektional entlang der Bewegungsachse zu erfassen, wobei das Verfahren die

Schritte umfasst:
- Erfassen eines Lastbewegungszustandes der ersten Frachtantriebseinheit; und
- Steuern der zweiten Frachtantriebseinheit nach Maßgabe des Lastbewegungszustandes der ersten Frachtantriebseinheit.

Ebenso kann die Frachtantriebseinheit gemäß jeglichen der vorstehend genannten Aspekte weitergebildet sein. Der Lastbewegungszustand kann ferner den Bewegungsparameter umfassen oder daraus abgeleitet bzw. von diesem gebildet werden. Ferner kann der Lastbewegungszustand Rückschlüsse darauf ermöglichen, ob die Frachtantriebseinheit aktuell eine Last bewegt oder bewegen könnte (beispielsweise da eine Last in einem Arbeitsbereich der Frachtantriebseinheit angeordnet ist). Das Verfahren kann zusätzlich den Schritt des Sendens von Signalen bezüglich des Lastbewegungszustandes der ersten Frachtantriebseinheit an die zweite Frachtantriebseinheit beinhalten. Ferner kann das Steuern der zweiten Frachtantriebseinheit ein Ein- oder Ausschalten der Frachtantriebseinheit bzw. eines Kraftübertragungselementes oder einer Aufstelleinheit hiervon beinhalten. Alternativ oder zusätzlich kann dies auch das Ändern der erzeugten Antriebskräfte beinhalten. Schließlich können die erste und zweite Frachtantriebseinheit entlang einer gemeinsamen Bewegungsachse aufeinanderfolgend angeordnet sein.

Übergeordnet kann also vorgesehen sein, dass eine erste und zweite Frachtantriebseinheit aufeinanderfolgend entlang einer gemeinsam Bewegungsachse bereitgestellt werden, wobei bei einer Lastbewegung in eine erste Richtung entlang der Bewegungsachse die zweite Frachtantriebseinheit das Erzeugen von Antriebskräften dann aufnimmt oder erhöht, wenn der Lastbewegungszustand der ersten Frachtantriebseinheit die Anwesenheit und/oder das Bewegen einer Last angibt. Ebenso kann bei einer Lastbewegung in eine zweite Richtung die erste Frachtantriebseinheit das Erzeugen von Antriebskräften dann aufnehmen oder erhöhen, wenn der Lastbewegungszustand der zweiten Frachtantriebseinheit die Anwesenheit und/oder das Bewegen einer Last angibt. Es versteht sich, dass die erste Richtung dabei derart gewählt sein kann, dass die Last zuerst durch den Arbeitsbereich der ersten Frachtantriebseinheit bewegt wird, wohingegen bei der zweiten Richtung zuerst der Arbeitsbereich der zweiten Frachtantriebseinheit überbrückt wird.

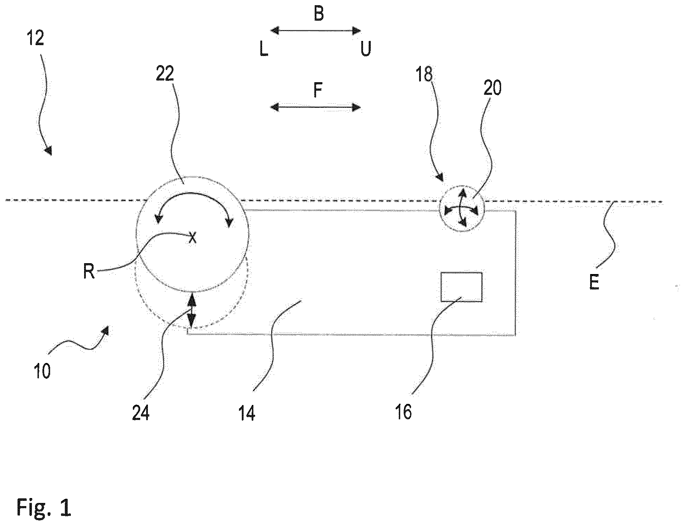

Die Erfindung wird im Folgenden anhand der beigefügten schematischen Figur 1 erläutert, die ein Ausführungsbeispiel einer erfindungsgemäßen Frachtantriebseinheit zeigt.

In Figur 1 ist eine schematische Seitenansicht einer Frachtantriebseinheit 10 gezeigt. Die strichliniert angedeutete Ebene E gibt dabei das Höhenniveau eines Bodenbereiches eines Frachtraums 12 an, in dem die Frachtantriebseinheit 10 angeordnet ist. Bei dem Frachtraum handelt es sich um den Frachtraum eines herkömmlichen Großraumflugzeugs. Eine Flugzeuglängsachse F erstreckt sich dabei entlang dem strichliniert angedeuteten Verlauf der Ebene E.

Die Frachtantriebseinheit 10 umfasst einen Grundkörper 14, in dem eine Steuereinheit 16 aufgenommen ist. An dem Grundkörper 14 ist eine Sensoreinheit 18 mit einer omnidirektional rotierbaren Kugel 20 angeordnet (siehe entsprechende Bewegungspfeile der Kugel 20 in Figur 1). Die Kugel 20 bildet ein bewegbares Element der Sensoreinheit 18, die dauerhaft über den Bodenbereich hinaus in den Frachtraum 12 hervorsteht. Somit kann die Kugel 20 mit einer entlang des Bodenbereichs verschiebbaren Last (nicht dargestellt) in Kontakt treten und nach Maßgabe einer Relativbewegung der Last zu der Frachtantriebseinheit 10 rotiert werden.

Im gezeigten Fall ist die Sensoreinheit 18 dazu ausgebildet, Lastbewegungen entlang einer Bewegungsachse B zu erfassen, die hier mit der Flugzeuglängsachse F zusammenfällt. Insgesamt kann die Sensoreinheit 18 somit omnidirektional von einer Last überfahren werden, erfasst die Lastbewegungen aber nur bidirektional entlang der Bewegungsachse B. Da die Frachtantriebseinheit 10 ortsfest nahe dem Bodenbereich des Frachtraums 12 montiert ist, stellt die erfasste Bewegungsrichtung auch eine Relativbewegungsrichtung der Last bezogen auf die feststehende Frachtantriebseinheit 10 dar.

Die Frachtantriebseinheit 10 umfasst ferner ein Kraftübertragungselement 22 in Form einer Antriebsrolle. Die Antriebsrolle 22 ist dazu ausgebildet, um eine senkrecht auf der Blattebene stehende Rotationsachse R zu rotieren (siehe entsprechender Bewegungspfeil der Antriebsrolle 22 in Figur 1). Mittels der Rotation der Antriebsrolle 22 werden Antriebskräfte erzeugt, die auf eine oberhalb der Frachtantriebseinheit 10 angeordneten Last übertragbar sind (nicht dargestellt). Die Antriebskräfte wirken dabei ebenfalls entlang der Bewegungsachse B. Insbesondere können für ein Beladen des Frachtraums 12 Antriebskräfte in die erste Richtung L entlang der Bewegungsachse B erzeugt werden und für ein Entladen in die entgegengesetzte zweite Richtung U der Bewegungsachse B. Hierfür kann eine Rotationsrichtung der Antriebsrolle 22 entsprechend umgekehrt werden.

In Figur 1 erkennt man schließlich, dass die Antriebsrolle 22 mittels einer pfeilförmig angedeuteten Aufstelleinheit 24 im Wesentlichen orthogonal zu dem Bodenbereich des Frachtraums 12 bewegt werden kann. Genauer gesagt kann die Antriebsrolle 22 in Richtung einer auf dem Bodenbereich angeordneten Last oder von dieser weg bewegt werden, also selektiv angehoben und abgesenkt werden.

Die in Figur 1 strichliniert angedeutete Position entspricht dabei einer abgesenkten Stellung, bei der die Antriebsrolle 22 nicht über den Bodenbereich hervorsteht und somit keine Antriebskräfte auf eine etwaige darauf angeordnete Last übertragen kann. In Figur 1 nimmt die Antriebsrolle 22 jedoch ihre angehobene Stellung ein, in der sie über den Bodenbereich hervorsteht und somit in Kontakt mit einer Last treten kann, um Antriebskräfte darauf zu übertragen. Derartige Aufstelleinheiten 24 sind aus dem Stand der Technik prinzipiell bekannt.

Bei einem Be- oder Entladen des Frachtraums 12 schiebt ein Bediener zunächst manuell oder durch Unterstützung flugzeugexterner Ladevorrichtungen eine Last entlang des Bodenbereichs. Erreicht er hierbei die Sensoreinheit 18 der Frachtantriebseinheit 10, werden sowohl die Bewegungsgeschwindigkeit als auch die Bewegungsrichtung L, U entlang der Bewegungsachse B als relevante Bewegungsparameter mittels der Sensoreinheit 18 erfasst. Die entsprechenden Signale werden von der Sensoreinheit 18 an die Steuereinheit 16 übermittelt. Diese steuert wiederum die Antriebsrolle 22 an, um Antriebskräfte in die entsprechend erfasste Bewegungsrichtung L, U zu erzeugen. Dies erfolgt in herkömmlicher Weise mittels eines Elektromotors. Die Antriebskräfte können ferner derart gewählt sein, dass die aktuelle Bewegungsgeschwindigkeit aufrechterhalten wird oder aber eine vorgegebene Sollgeschwindigkeit erreicht wird. Dabei kann auch berücksichtigt werden, dass weitere (beispielsweise in die Blattebene hinein versetzte) Frachtantriebseinheiten 10 parallel hierzu ebenfalls Antriebskräfte auf die Last übertragen. '

Zeigt die Sensoreinheit 18 jedoch nicht länger eine Lastbewegung an, wird die aktive Rotation der Antriebsrolle 22 unterbunden. Außerdem wird die Antriebsrolle 22 über die Aufstelleinheit 24 abgesenkt, um Störkonturen in dem Frachtraum 12 zu verringern. Dies kann beispielsweise ein Rotieren der Last erleichtern, beziehungsweise einen Wechsel von einer Bewegung längs der Bewegungsachse B zu einer quer hierzu verlaufenen Bewegung (oder umgekehrt) im Bereich eines Frachttores.

Konkret erreicht die Last bei einem Beladen gemäß der Richtung L zuerst die Sensoreinheit 18, woraufhin die Antriebsrolle 22 in der vorstehend beschriebenen Weise ansteuerbar ist. Bei einem Entladen gemäß der Richtung U erreicht die Last hingegen zuerst die Antriebsrolle 22, die zunächst passiv rotiert und der Bewegung der Last folgt. Ab einem Erreichen der Sensoreinheit 18 wird die Lastbewegung jedoch erfasst und die Antriebsrolle 22 zum Erzeugen von Antriebskräften aktiv angesteuert und rotiert. Prinzipiell ist es aber ebenso denkbar, eine zweite oder beliebig viele Sensoreinheiten 18 vorzusehen, die der Antriebsrolle 22 auch in der Entladungsrichtung U vorgeschaltet sind.

Die vorstehend erläuterte Frachtantriebseinheit 10 ermöglicht somit eine bedarfsgerechte elektromotorische Unterstützung der Lastbewegung in dem Frachtraum 12, ohne dass hierfür gesonderte Eingaben des Bedieners erforderlich sind. Vielmehr reicht es aus, die Last über die Sensoreinheit 18 zu bewegen, woraufhin das Erzeugen von Antriebskräften in die gewünschte Richtung und mit einem gewünschten Betrag automatisch einsetzt. Mit anderen Worten ermöglicht die Frachtantriebseinheit 10 eine automatische Lastübernahme, sodass zusätzliche Bedienelemente vermieden und daher die Systemkomplexität verringert werden kann. Durch eine derartige bedarfsgerechte Lastübernahme wird auch der Energiebedarf des Gesamtsystems verringert.

Der Frachtraum 12 kann ferner in bekannter Weise eine Vielzahl von Frachtantriebseinheiten 10 umfassen, die entlang der Bewegungsachse B angeordnet sind. In diesem Fall können die Steuereinheiten 16 der Frachtantriebseinheiten 10 untereinander Signale austauschen, um die elektromotorische Unterstützung der Lastbewegung zuverlässig und bedarfsgerecht zu steuern. Beispielsweise kann bei einem Beladen eine weitere Frachtantriebseinheit 10, die der Frachtantriebseinheit 10 aus Figur 1 in der Beladungsrichtung L unmittelbar vorgeschaltet ist, ein Signal übermitteln, sobald diese eine Lastbewegung erfasst und/oder Antriebskräfte erzeugt. In diesem Fall kann die Steuereinheit 16 der gezeigten nachgeordneten Frachtantriebseinheit 10 die Aufstelleinheit 24 ansteuern, um die Antriebsrolle 22 in die in Figur 1 gezeigte Position anzuheben. Die Information ob, in welche Richtung und/oder mit welcher Geschwindigkeit eine Last transportiert wird, kann von einer Frachtantriebseinheit 10 jeweils zumindest unmittelbar vor- und/oder nachgelagerten weiteren Frachtantriebseinheiten 10 übermittelt werden.

In bekannter Weise kann die Frachtantriebseinheit 10 ferner in der Nähe einer nicht dargestellten Verriegelungseinrichtung für die Last angeordnet sein, die als selektiv aufrichtbare und absenkbare sog. Latcheinheit ausgebildet sein kann. Die Steuereinheit 16 der Frachtantriebseinheit 10 kann dabei ferner dazu ausgebildet sein, Signale bezüglich eines aktuellen Verriegelungszustandes der Verriegelungseinrichtung zu empfangen. Zeigen diese eine aktive Verriegelung an, kann die Steuereinheit 16 die Frachtantriebseinheit 10 dazu veranlassen, die Antriebsrolle 22 in deren abgesenkte Position zu bewegen und/oder die Frachtantriebseinheit 10 allgemein in einen Ruhezustand zu versetzen, in dem insbesondere keine Antriebskrafterzeugung erfolgt. Im gleichen Sinne kann die Steuereinheit 10 aber ein Anheben der Antriebsrolle 22 veranlassen und/oder den Ruhezustand der Frachtantriebseinheit beenden, wenn eine Entriegelung mittels der Verriegelungseinrichtung detektiert wird. Anschließend kann die Antriebsrolle 22 spätestens dann für das Erzeugen von Antriebskräften angetrieben werden, wenn, wie vorstehend beschrieben, eine Lastbewegung mittels der Sensoreinheit 18 erfasst wird.

## Patentansprüche

1. Frachtantriebseinheit (10) für einen Frachtraum (12), insbesondere für den Frachtraum (12) von einem Luftfahrzeug,wobei die Frachtantriebseinheit (10) umfasst:
wenigstens ein angetriebenes Kraftübertragungselement (22), das dazu ausgebildet ist, Antriebskräfte auf eine in dem Frachtraum (12) angeordnete Last zu übertragen, um die Last innerhalb des Frachtraums (12) entlang mindestens einer vorbestimmten Bewegungsachse (B) zu bewegen;
eine Sensoreinheit (18), die dazu ausgebildet ist, omnidirektional von der Last überfahren zu werden und wenigstens einen Bewegungsparameter der Last bidirektional entlang der Bewegungsachse (B) zu erfassen; und
eine Steuereinheit (16), die dazu ausgebildet ist, das Kraftübertragungselement (22) nach Maßgabe des erfassten Bewegungsparameters zu steuern.

2. Frachtantriebseinheit (10) nach Anspruch 1,
wobei die Frachtantriebseinheit (10) in einem Bodenbereich des Frachtraums (12) anordenbar ist und/oder wobei das Kraftübertragungselement (22) rollenförmig ausgebildet ist.

3. Frachtantriebseinheit (10) nach einem der vorangehenden Ansprüche,
wobei der erfasste Bewegungsparameter eine Bewegungsrichtung (U,L) der Last umfasst, insbesondere relativ zu dem Kraftübertragungselement (22).

4. Frachtantriebseinheit (10) nach einem der vorangehenden Ansprüche,
wobei die Steuereinheit (16) dazu ausgebildet ist, das Kraftübertragungselement (22) zum Erzeugen vorbestimmter Antriebskräfte zu steuern, insbesondere derart, dass die Antriebskräfte zumindest teilweise im Wesentlichen proportional zu dem erfassten Bewegungsparameter erzeugt werden.

5. Frachtantriebseinheit (10) nach einem der vorangehenden Ansprüche,
wobei die Steuereinheit (16) dazu ausgebildet ist, das Kraftübertragungselement (22) zum Erzeugen von Antriebskräften in vorbestimmte Richtungen zu steuern, insbesondere derart, dass die Antriebskräfte im Wesentlichen in derjenigen Richtung erzeugt werden, in der eine Bewegung der Last relativ zu dem Kraftübertragungselement (22) erfolgt.

6. Frachtantriebseinheit (10) nach einem der vorangehenden Ansprüche,
wobei die Steuereinheit (16) dazu ausgebildet ist, Signale von wenigstens einer weiteren Frachtantriebseinheit (10) zu empfangen und/oder an wenigstens eine weitere Frachtantriebseinheit (10) zu senden.

7. Frachtantriebseinheit (10) nach Anspruch 6,
wobei die Steuereinheit (16) dazu ausgebildet ist, das Kraftübertragungselement (22) nach Maßgabe des empfangenen Signals zu steuern, insbesondere wobei das empfangene Signal Informationen bezüglich des von der weiteren Frachtantriebseinheit (10) erfassten Bewegungsparameters umfasst.

8. Frachtantriebseinheit (10) nach Anspruch 6 oder 7,
wobei die Steuereinheit (16) dazu ausgebildet ist, einen Betriebszustand der Frachtantriebseinheit (10) zu ändern, wenn das empfangene Signal darauf schließen lässt, dass die Last von der weiteren Frachtantriebseinheit (10) in Richtung der Frachtantriebseinheit (10) bewegt wird.

9. Frachtantriebseinheit (10) nach einem der vorangehenden Ansprüche,
wobei die Frachtantriebseinheit (10) ferner eine Aufstelleinheit (24) umfasst, die dazu ausgebildet ist, das Kraftübertragungselement (22) in Richtung der Last und/oder von dieser wegzubewegen, und insbesondere, wobei die Steuereinheit (16) dazu ausgebildet ist, die Aufstelleinheit (24) nach Maßgabe des erfassten Bewegungsparameters und/oder eines empfangenen Signals von wenigstens einer weiteren Frachtantriebseinheit (10) zu steuern

10. Frachtantriebseinheit (10) nach einem der vorangehenden Ansprüche,
wobei die Steuereinheit (16) dazu ausgebildet ist, eine Stromaufnahme der Frachtantriebseinheit (10) zu ermitteln und, optional, das Kraftübertragungselement (22) nach Maßgabe der ermittelten Stromaufnahme zu steuern.

11. Frachtantriebseinheit (10) nach einem der vorangehenden Ansprüche,
wobei die Frachtantriebseinheit (10) dazu ausgebildet ist, eine Last im Wesentlichen entlang wenigstens einer Bewegungsachse (B) zu bewegen, und, optional, wobei die Sensoreinheit (18) und das Kraftübertragungselement (22) im Wesentlichen auf der Bewegungsachse (B) angeordnet sind oder auf einer hierzu parallelen gemeinsamen Achse.

12. Frachtantriebseinheit (10) nach einem der vorangehenden Ansprüche,
wobei die Sensoreinheit (18) in einem Abstand von weniger als 1 Meter und vorzugsweise weniger als 30 cm oder weniger als 10 cm von dem Kraftübertragungselement (22) angeordnet ist.

13. Frachtantriebseinheit (18) nach einem der vorangehenden Ansprüche,
wobei die Sensoreinheit (18) ein bewegbares Element (20) umfasst, das nach Maßgabe der Bewegungen der Last bewegbar ist, und wobei die Sensoreinheit (18) dazu ausgebildet ist, basierend auf den Bewegungen des bewegbaren Elements (20) den Bewegungsparameter der Last zu erfassen.

14. Frachtraum (12), insbesondere von einem Luftfahrzeug,
umfassend wenigstens eine Frachtantriebseinheit (10) nach einem der vorangehenden Ansprüche.

15. Verfahren zum Betreiben eines Frachtraums (12),
wobei der Frachtraum (12) wenigstens eine erste und zweite Frachtantriebseinheit (10) umfasst, die jeweils wenigstens ein angetriebenes Kraftübertragungselement (22) und eine Sensoreinheit (18) umfassen, wobei das Kraftübertragungselement (22) dazu ausgebildet ist, Antriebskräfte auf eine in dem Frachtraum (12) angeordnete Last zu übertragen, um die Last innerhalb des Frachtraums (12) entlang mindestens einer vorbestimmten Bewegungsachse (B) zu bewegen, und wobei die Sensoreinheit (18) dazu ausgebildet ist, omnidirektional von der Last überfahren zu werden und wenigstens einen Bewegungsparameter der Last bidirektional entlang der Bewegungsachse (B) zu erfassen,
wobei das Verfahren die Schritte umfasst:
- Erfassen eines Lastbewegungszustandes der ersten Frachtantriebseinheit (10);
- Steuern der zweiten Frachtantriebseinheit (10) nach Maßgabe des Lastbewegungszustandes der ersten Frachtantriebseinheit (10).

## Claims

1. Cargo drive unit (10) for a cargo space (12) in particular for the cargo space (12) of an aircraft, wherein the cargo drive unit (10) comprises:
at least one driven force-transmission element (22) which is designed to transmit drive forces to a load which is arranged in the cargo space (12) in order to move the load within the cargo space (12) along at least one predetermined movement axis (B);
a sensor unit (18) which is designed to be travelled over omnidirectionally by the load and to sense at least one movement parameter of the load bidirectionally along the movement axis (B); and
a control unit (16) which is designed to control the force-transmission element (22) in accordance with the recorded movement parameter.

2. Cargo drive unit (10) according to Claim 1,
wherein the cargo drive unit (10) can be arranged in a floor area of the cargo space (12) and/or wherein the force-transmission element (22) is embodied in the form of a roller.

3. Cargo drive unit (10) according to one of the preceding claims,
wherein the sensed movement parameter comprises a movement direction (U, L) of the load, in particular relative to the force-transmission element (22).

4. Cargo drive unit (10) according to one of the preceding claims,
wherein the control unit (16) is designed to control the force-transmission element (22) to generate predetermined drive forces, in particular in such a way that the drive forces are generated at least to a certain extent essentially proportionally with respect to the sensed movement parameter.

5. Cargo drive unit (10) according to one of the preceding claims,
wherein the control unit (16) is designed to control the force-transmission element (22) to generate drive forces in predetermined directions, in particular in such a way that the drive forces are generated essentially in that direction in which a movement of the load relative to the force-transmission element (22) occurs.

6. Cargo drive unit (10) according to one of the preceding claims,
wherein the control unit (16) is designed to receive signals from at least one other cargo drive unit (10) and/or to transmit them to at least one other cargo unit (10).

7. Cargo drive unit (10) according to Claim 6,
wherein the control unit (16) is designed to control the force-transmission element (22) in accordance with the received signal, in particular wherein the received signal comprises information relating to the movement parameter which is sensed by the other cargo drive unit (10).

8. Cargo drive unit (10) according to Claim 6 or 7,
wherein the control unit (16) is designed to change an operating state of the cargo drive unit (10) if the received signal implies that the load is moved in the direction of the cargo drive unit (10) by the other cargo drive unit (10).

9. Cargo drive unit (10) according to one of the preceding claims,
wherein the cargo drive unit (10) also comprises a positioning unit (24) which is designed to move the force transmission element (22) in the direction of the load and/or away therefrom and, in particular, wherein the control unit (16) is designed to control the positioning unit (24) in accordance with the sensed movement parameter and/or a received signal from at least one other cargo drive unit (10).

10. Cargo drive unit (10) according to one of the preceding claims,
wherein the control unit (16) is designed to determine power consumption by the cargo drive unit (10) and optionally to control the force-transmission element (22) in accordance with the determined power consumption.

11. Cargo drive unit (10) according to one of the preceding claims,
wherein the cargo drive unit (10) is designed to move a load essentially along at least one movement axis (B) and optionally, wherein the control unit (18) and the force-transmission element (22) are arranged essentially on the movement axis (B) or on a common axis which is parallel thereto.

12. Cargo drive unit (10) according to one of the preceding claims,
wherein the sensor unit (18) is arranged at a distance of less than 1 metre and preferably less than 30 cm or less than 10 cm from the force-transmission element (22).

13. Cargo drive unit (18) according to one of the preceding claims,
wherein the sensor unit (18) comprises a movable element (20) which can be moved in accordance with the movements of the load, and wherein the sensor unit (18) is designed to sense the movement parameter of the load on the basis of the movements of the movable element (20).

14. Cargo space (12), in particular of an aircraft,
comprising at least one cargo drive unit (10) according to one of the preceding claims.

15. Method for operating a cargo space (12),
wherein the cargo space (12) comprises at least a first and a second cargo drive unit (10) which each comprises at least one driven force-transmission element (22) and a sensor unit (18) wherein the force-transmission element (22) is designed to transmit drive forces to a load which is arranged in the cargo space (12), in order to move the load with the cargo space (12) along at least one predetermined movement axis (B), and wherein the sensor unit (18) is designed to be moved over omnidirectionally by the load, and to sense at least one movement parameter of the load bidirectionally along the movement axis (B),
wherein the method comprises the steps:
- sensing a load movement state of the first cargo drive unit (10); and
- controlling the second cargo drive unit (10) in accordance with the load movement state of the first cargo drive unit (10).

## Revendications

1. Unité d'entraînement de cargaison (10) pour un espace de chargement (12), notamment pour l'espace de chargement (12) d'un aéronef, l'unité d'entraînement de cargaison (10) comprenant :
au moins un élément de transmission de force (22) entraîné, lequel est conçu pour transmettre des forces d'entraînement à une charge disposée dans l'espace de chargement (12) afin de déplacer la charge à l'intérieur de l'espace de chargement (12) le long d'au moins un axe de déplacement (B) prédéterminé ;
une unité de détection (18), qui est configurée pour un passage omnidirectionnel de la charge sur celle-ci et pour détecter au moins un paramètre de déplacement de la charge de manière bidirectionnelle le long de l'axe de déplacement (B) ; et
une unité de commande (16) qui est configurée pour commander l'élément de transmission de force (22) conformément au paramètre de déplacement détecté.

2. Unité d'entraînement de cargaison (10) selon la revendication 1, l'unité d'entraînement de cargaison (10) pouvant être disposée dans une zone du sol de l'espace de chargement (12) et/ou l'élément de transmission de force (22) étant réalisé en forme de rouleau.

3. Unité d'entraînement de cargaison (10) selon l'une des revendications précédentes, le paramètre de déplacement détecté comprenant un sens de déplacement (U, L) de la charge, notamment par rapport à l'élément de transmission de force (22).

4. Unité d'entraînement de cargaison (10) selon l'une des revendications précédentes, l'unité de commande (16) étant configurée pour commander l'élément de transmission de force (22) en vue de générer des forces d'entraînement prédéterminées, notamment de telle sorte que les forces d'entraînement sont générées au moins partiellement sensiblement proportionnellement au paramètre de déplacement détecté.

5. Unité d'entraînement de cargaison (10) selon l'une des revendications précédentes, l'unité de commande (16) étant configurée pour commander l'élément de transmission de force (22) en vue de générer des forces d'entraînement dans des directions prédéterminées, notamment de telle sorte que les forces d'entraînement sont générées sensiblement dans la direction dans laquelle a lieu un déplacement de la charge par rapport à l'élément de transmission de force (22).

6. Unité d'entraînement de cargaison (10) selon l'une des revendications précédentes, l'unité de commande (16) étant configurée pour recevoir des signaux d'au moins une unité d'entraînement de cargaison (10) supplémentaire et/ou pour envoyer des signaux à au moins une unité d'entraînement de cargaison (10) supplémentaire.

7. Unité d'entraînement de cargaison (10) selon la revendication 6, l'unité de commande (16) étant configurée pour commander l'élément de transmission de force (22) conformément au signal reçu, le signal reçu comportant notamment des informations concernant le paramètre de déplacement détecté par l'unité d'entraînement de cargaison (10) supplémentaire.

8. Unité d'entraînement de cargaison (10) selon la revendication 6 ou 7, l'unité de commande (16) étant configurée pour modifier un état opérationnel de l'unité d'entraînement de cargaison (10) lorsque le signal reçu amène à déduire que la charge est déplacée par l'unité d'entraînement de cargaison (10) supplémentaire en direction de l'unité d'entraînement de cargaison (10).

9. Unité d'entraînement de cargaison (10) selon l'une des revendications précédentes, l'unité d'entraînement de cargaison (10) comportant en outre une unité de mise en place (24), laquelle est conçue pour déplacer l'élément de transmission de force (22) en direction de la charge et/ou pour l'éloigner de celle-ci, et l'unité de commande (16) étant notamment configurée pour commander l'unité de mise en place (24) conformément au paramètre de déplacement détecté et/ou à un signal reçu d'au moins une unité d'entraînement de cargaison (10) supplémentaire.

10. Unité d'entraînement de cargaison (10) selon l'une des revendications précédentes, l'unité de commande (16) étant configurée pour déterminer une consommation de courant de l'unité d'entraînement de cargaison (10) et, en option, commander l'élément de transmission de force (22) conformément à la consommation de courant déterminée.

11. Unité d'entraînement de cargaison (10) selon l'une des revendications précédentes, l'unité d'entraînement de cargaison (10) étant configurée pour déplacer une charge sensiblement le long d'au moins un axe de déplacement (B) et, en option, l'unité de détection (18) et l'élément de transmission de force (22) étant disposés sensiblement sur l'axe de déplacement (B) ou sur un axe parallèle à celui-ci.

12. Unité d'entraînement de cargaison (10) selon l'une des revendications précédentes, l'unité de détection (18) étant disposée à une distance inférieure à 1 mètre et de préférence inférieure à 30 cm ou inférieure à 10 cm de l'élément de transmission de force (22).

13. Unité d'entraînement de cargaison (18) selon l'une des revendications précédentes, l'unité de détection (18) comportant un élément déplaçable (20) qui peut être déplacé conformément aux déplacements de la charge, et l'unité de détection (18) étant configurée pour détecter le paramètre de déplacement de la charge en se basant sur les déplacements de l'élément déplaçable (20).

14. Espace de chargement (12), notamment d'un aéronef, comprenant au moins une unité d'entraînement de cargaison (10) selon l'une des revendications précédentes.

15. Procédé d'exploitation d'un espace de chargement (12),
l'espace de chargement (12) comportant au moins une première et une deuxième unité d'entraînement de cargaison (10), lesquelles comportent respectivement au moins un élément de transmission de force (22) entraîné et une unité de détection (18), l'élément de transmission de force (22) étant configuré pour transmettre des forces d'entraînement à une charge disposée dans l'espace de chargement (12) afin de déplacer la charge à l'intérieur de l'espace de chargement (12) le long d'au moins un axe de déplacement (B) prédéterminé, et l'unité de détection (18) étant configurée pour un passage omnidirectionnel de la charge sur celle-ci et pour détecter au moins un paramètre de déplacement de la charge de manière bidirectionnelle le long de l'axe de déplacement (B),
le procédé comprenant les étapes suivantes :
- détection d'un état de déplacement de la charge de la première unité d'entraînement de cargaison (10) ;
- commande de la deuxième unité d'entraînement de cargaison (10) conformément à l'état de déplacement de la charge de la première unité d'entraînement de cargaison (10).
